**Europäisches Patentamt**

**European Patent Office**

**Office européen des brevets**

(19)

(11) Veröffentlichungsnummer : **0 109 980**
**B1**

# (12) EUROPÄISCHE PATENTSCHRIFT

(45) Veröffentlichungstag der Patentschrift :
07.05.86

(21) Anmeldenummer : 82111248.9

(22) Anmeldetag : 04.12.82

(51) Int. Cl.⁴ : **F 16 L   7/00**

(54) Distanzhalter für Rohre.

(43) Veröffentlichungstag der Anmeldung :
13.06.84 Patentblatt 84/24

(45) Bekanntmachung des Hinweises auf die Patenterteilung : 07.05.86 Patentblatt 86/19

(84) Benannte Vertragsstaaten :
AT BE CH DE FR GB IT LI NL SE

(56) Entgegenhaltungen :
DE-A- 2 906 487
DE-A- 2 949 126
US-A- 4 182 378

(73) Patentinhaber : **DIMEX-Kennzeichnungsprodukte GmbH**
**Goethestrasse 32**
**D-7406 Mössingen (DE)**

(72) Erfinder : **Göhner, Siegfried**
**Goethestrasse 32**
**D-7406 Mössingen (DE)**

(74) Vertreter : **Möbus, Rudolf, Dipl.-Ing.**
**Hindenburgstrasse 65**
**D-7410 Reutlingen (DE)**

**Beschreibung**

Die Erfindung betrifft einen Distanzhalter für durch Schutzrohre hindurchgeführte schwere Rohre, bestehend aus einem Ringkörper, der aus mehreren, aus Kunststoff gefertigten und miteinander verbundenen, mindestens teilweise mit Gleitkufen bildenden Vorsprüngen versehenen Segmenten zusammengesetzt ist, die sich quer zur Umfangsrichtung des Distanzhalters jeweils mehrfach teilweise überlappen und in ihren Überlappungsbereichen miteinander fluchtende Ausnehmungen zum Einsetzen von gemeinsame Gelenkorgane benachbarter Segmente bildenden Kunststoffbolzen aufweisen.

Distanzhalter dieser Art sind durch die DE-A-29 49 126. 7 bereits vorgeschlagen worden. Der Erfindung liegt die Aufgabe zugrunde, den aus mehreren Segmenten als Ringkörper zusammengesetzten Distanzhalter so auszubilden, daß er auf den Rohren einfach und sicher festgespannt werden kann.

Die gestellte Aufgabe wird bei dem Distanzhalter der eingangs genannten Art erfindungsgemäß dadurch gelöst, daß mindestens an einer Segment-Überlappungsstelle des Distanzhalters der Kunststoffbolzen als Exzenter-Spannbolzen ausgebildet ist, der einen kleineren Durchmesser als die miteinander fluchtenden Ausnehmungen der Segmente aufweist und in Abschnitten, die bei eingesetztem Exzenter-Spannbolzen in die Ausnehmungen eines der beiden sich überlappenden Segmente zu liegen kommen, mit exzentrischen zylindrischen Nockenkörpern besetzt ist, deren Außendurchmesser dem Durchmesser dieser Ausnehmungen entspricht.

Durch den Exzenter-Spannbolzen lassen sich zwei benachbarte Segmente in ihrem Überlappungsbereich mehr oder weniger stark ineinanderziehen, wodurch eine Verkleinerung des Umfanges des Ringkörpers und dadurch das erwünschte Festspannen des Ringkörpers auf dem Rohr erreicht wird. Um den oder die Exzenter-Spannbolzen in einer eingestellten Lage zu halten, kann er bzw. können sie auf mindestens einer Außenfläche mit einer Verzahnung versehen sein, die zur Verstellsicherung in eine an einem Segment ausgebildete Gegenverzahnung eingreift. Die Verzahnung kann auf der Umfangsfläche mindestens eines der exzentrischen Nockenkörper mit Gegenverzahnung auf der Innenfläche einer Segmentausnehmung ausgebildet sein, oder aber auf der Stirnseite eines Anschlagbundes am einen Ende des Spannbolzens mit Gegenverzahnung auf der Außenseite eines Segmentes und konzentrisch zum Rand einer für den Exzenter-Spannbolzen vorgesehenen Ausnehmung dieses Segmentes. Eine Längsverschiebesicherung der Exzenter-Spannbolzen läßt sich durch die Ausbildung eines Flansches am einen Ende des Spannbolzens und dadurch erzielen, daß der Flanschrand über den größten Teil des Drehbereiches des Exzenter-Spannbolzens in eine an einem Segment ausgebildete Sicherungsnut eintaucht.

Die Exzenter-Spannbolzen haben den Vorteil, daß sie nicht die Herstellung eines besonderen Spannschlosses erforderlich machen, sondern an jeder Segment-Überlappungsstelle des aus lauter gleichen Segmenten hergestellten Ringkörpers als Ersatz für einen dort normalerweise ein gemeinsames Gelenkorgan für zwei benachbarte Segmente bildenden einfachen Kunststoffbolzen eingesetzt werden können. Die Exzenter-Spannbolzen lassen sich mit einer die bei einem Spannen des Ringkörpers auftretenden Kräfte mit Sicherheit ohne Bruch- oder Verformungsgefahr aufnehmender Stärke herstellen, da der zum Spannen erforderliche Verstellweg bei dem aus einer Vielzahl von Segmenten zusammengesetzten Ringkörper im allgemeinen gering ist und erforderlichenfalls auf mehrere Exzenter-Spannbolzen verteilt werden kann.

Nachfolgend wird ein Ausführungsbeispiel eines erfindungsgemäß ausgebildeten Distanzhalters anhand der beiliegenden Zeichnung näher erläutert.

Im einzelnen zeigen :

Figur 1 eine perspektivische Darstellung eines von einem Distanzhalter umgebenen Rohres ;

Figur 2 eine Draufsicht in Richtung des Pfeiles II in Fig. 1 auf ein Einzelsegment des Ringkörpers und auf die Verbindungsstelle mit einem benachbarten Segment in gegenüber Fig. 1 vergrößertem Maßstab und im Bereich der Verbindungsstelle im Schnitt ;

Figur 3 ein Ringkörper-Segment in stirnseitiger Ansicht und teilweise im Schnitt entlang der Linie III-III in Fig. 2 ;

Figur 4 einen Teilschnitt durch die Verbindungsstelle zwischen zwei Ringkörper-Segmenten entlang der Linie IV-IV in Fig. 2 ;

Figur 5 einen Teilschnitt im Bereich der Verbindungsstelle zwischen zwei Ringkörper-Segmenten entlang der Linie V in Fig. 2.

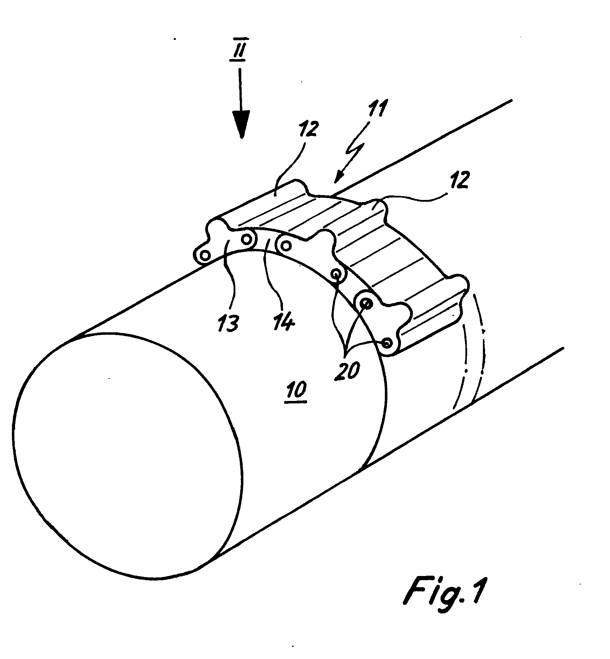

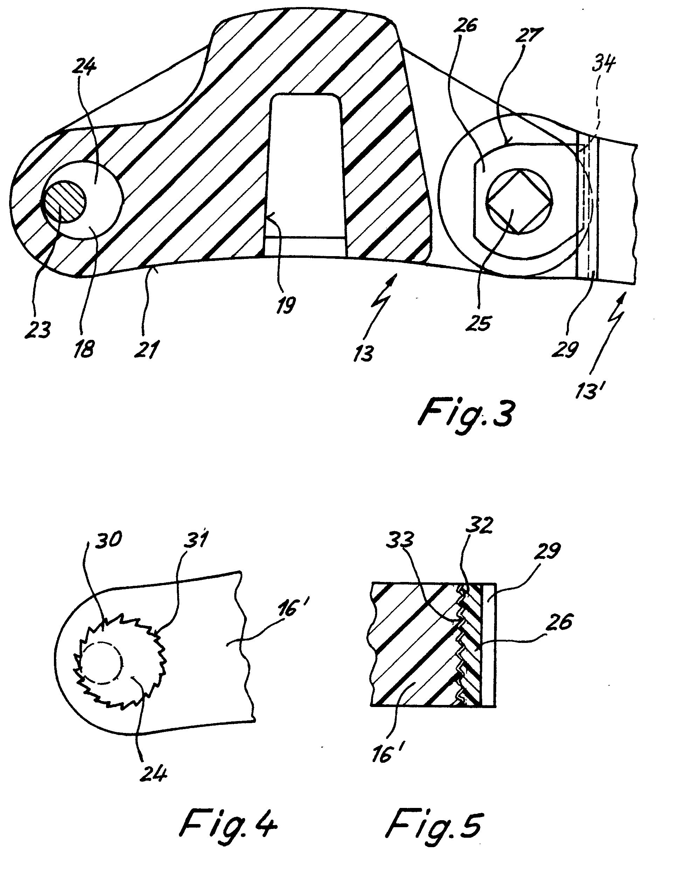

Fig. 1 zeigt ein Rohr 10 einer Freileitung, das durch ein nicht dargestelltes Schutzrohr hindurch verlegt werden soll und zu diesem Zweck in Abständen mit Distanzhaltern 11 besetzt wird, die einen Abstand des Rohres 10 vom äußeren Schutzrohr bewirken. In Fig. 1 ist ein solcher Distanzhalter teilweise dargestellt. Er ist aus einzelnen, relativ kurzen Segmenten 13, 14 zusammengesetzt, wobei die Segmente 13 einen rippenartigen Vorsprung 12 aufweisen, auf welchen das Rohr 10 beim Einbringen in das äußere Schutzrohr gleitet. Der Distanzhalter 11 kann aber auch aus lauter gleichen Segmenten 13 zusammengesetzt sein, deren Querschnitt aus Fig. 3 ersichtlich ist.

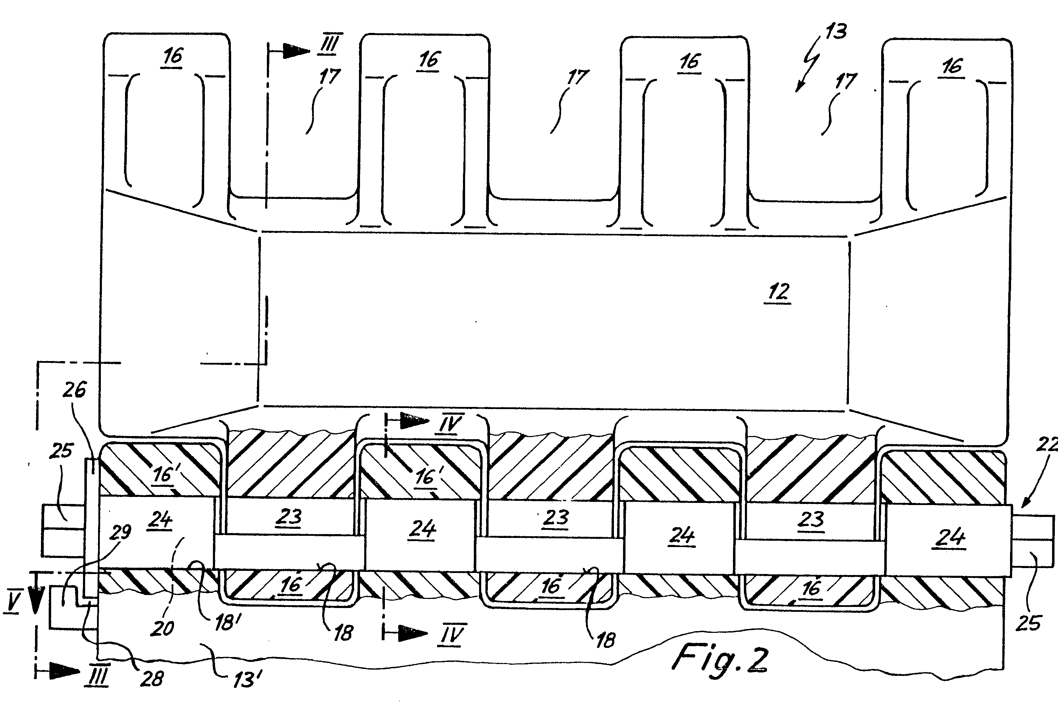

Fig. 2 zeigt eine Draufsicht auf eines der Segmente 13. Es ist einstückig aus Kunststoff gefertigt und in seinem Mittelteil zu der Gleitkufe 12 ausgebildet. Zu beiden Seiten des Mittelteiles erstrecken sich in gleichmäßigen Abständen gleiche Ansatzteile 16. Auf der einen Seite sind es vier Ansatzteile, auf der anderen Seite drei Ansatzteile 16. Die zwischen den Ansatzteilen 16 befindlichen Lücken 17 haben die gleiche Breite wie die Ansatzteile 16, und die Ansatzteile 16 der einen Seite der Segmente 13 stehen auf Lücke zu den Ansatzteilen 16 ihrer anderen Seite. Auf diese Weise lassen sich benachbarte Segmente 13 und 13′ mit ihren Ansatzteilen 16, 16′ ineinanderschieben, wie dies im geschnittenen Teil der Fig. 2 dargestellt ist, so daß sich benachbarte Segmente 13, 13′ gegenseitig überlappen. Die Ansatzteile 16, 16′ jeder Seite der Segmente 13, 13′ weisen eine aus Fig. 3 ersichtliche Durchgangsbohrung 18 auf. Die Durchgangsbohrungen 18 aller gleichgerichteten Ansätze 16, 16′ fluchten miteinander. Durch die miteinander fluchtenden Durchgangsbohrungen 18 der mit ihren Ansätzen ineinandergeschobenen benachbarten Segmente 13, 13′ ragen als Gelenkverbindungselemente aus Kunststoff gefertigte Schraubbolzen 20 (Fig. 1). Zur Materialersparnis sind gemäß Fig. 3 in den Segmenten 13 im Bereich der Gleitkufe 12 zur rohrseitigen Anlagefläche 21 des Segmentes 13 hin offene Ausnehmungen 19 vorgesehen, durch welche auch eine Gewichtsverminderung des Distanzhalters 11 erreicht wird.

Zum Festspannen des aus den mehreren Segmenten 13 zusammengesetzten Distanzhalters 11 auf dem Rohr 10 ist an mindestens einer Verbindungsstelle zwischen zwei benachbarten Segmenten 13 und 13′ anstelle eines normalen Schraubbolzens 20 ein Exzenter-Spannbolzen 22 in die miteinander fluchtenden Durchgangsbohrungen 18, 18′ der sich überlappenden benachbarten Segmente 13, 13′ eingesetzt. Fig. 2 zeigt eine solche mit einem Exzenter-Spannbolzen 22 versehene Verbindungsstelle zwischen zwei Segmenten. Der Exzenter-Spannbolzen 22 ist gemäß Fig. 2 und 3 abwechselnd mit Abschnitten 23, die einen kleineren Durchmesser als die Durchgangsbohrungen 18, 18′ aufweisen, und exzentrisch zu den Abschnitten 23 ausgebildeten zylindrischen Nockenkörpern 24, deren Durchmesser dem Durchmesser der Durchgangsbohrungen 18, 18′ entspricht, versehen. Die Aufteilung ist so getroffen, daß die Nockenkörper 24 bei eingesetztem Exzenter-Spannbolzen 22 jeweils in Durchgangsbohrungen 18′ der Ansatzteile 16′ des Segmentes 13′ zu liegen kommen, während die dazu exzentrischen Abschnitte 23 des Exzenter-Spannbolzens in die Durchgangsbohrungen 18 der Ansatzteile 16 des Segmentes 13 zu liegen kommen.

An beiden Enden des Exzenter-Spannbolzens 22 sind über die Stirnseiten der Segmente 13, 13′ vorstehende Vierkantdorne 25 zum Ansetzen eines Schraubenschlüssels ausgebildet. Außerdem ist der Exzenter-Spannbolzen 22 an seinem einen Ende mit einem Anschlagbund 26 versehen, dessen Rand 27 als Sicherungskurve ausgebildet ist, dergestalt, daß er über den größten Teil des Drehbereiches des Exzenter-Spannbolzens 22 in eine am einen Segment 13′ ausgebildete Sicherungsnut 28 (Fig. 2) eintaucht. Die Sicherungsnut 28 ist an einem auf der Stirnseite des Segmentes 13′ vorspringenden Steg 29 ausgebildet.

Durch Drehen des eingeschobenen Exzenter-Spannbolzens 22 bis maximal 180° werden durch die zueinander exzentrischen Abschnitte 23 und Nockenkörper 24 des Spannbolzens 22 die benachbarten Segmente 13 und 13′ mit ihren Ansatzteilen 16, 16′ stärker ineinandergezogen, wodurch zwangsläufig eine Durchmesserverminderung des ringförmigen Distanzhalters 11 und damit sein Festspannen auf dem Rohr 10 bewirkt wird.

Um ein Drehen um mehr als 180° zu verhindern, ist am Anschlagbund ein Drehanschlag 34 ausgebildet. Um ein Rückdrehen des Exzenter-Spannbolzens 22 zu verhindern, ist er auf mindestens einer seiner Außenflächen mit einer Verzahnung versehen, die zur Verstellsicherung in eine an einem Segment 13, 13′ ausgebildete Gegenverzahnung eingreift. Eine solche verzahnte Außenfläche kann gemäß Fig. 4 die Außenfläche eines der Nockenkörper 24 sein. Es genügt, wenn einer der mehreren Nockenkörper 24 des Exzenter-Spannbolzens 22 mit einer Außenverzahnung 30 versehen ist, die in eine entsprechende Gegenverzahnung 31 der Durchgangsbohrung 18′ des Ansatzteiles 16′ zusammenwirkt, in welchen der gezahnte Nockenkörper 24 bei eingeschobenem Exzenter-Spannbolzen zu liegen kommt. Zur Rückdrehsicherung kann aber auch nach Fig. 5 der Anschlagbund 26 des Exzenter-Spannbolzens 22 auf seiner den Segmenten zugekehrten Seite mit einer Radialverzahnung 32 versehen sein, die mit einer Gegenradialverzahnung 33 zusammenwirkt, die auf der Stirnseite des zugeordneten Segmentes, hier eines Ansatzteiles 16′ des Segmentes 13′, zusammenwirkt.

**Patentansprüche**

1. Distanzhalter (11) für durch Schutzrohre hindurchgeführte schwere Rohre (10), bestehend aus einem Ringkörper, der aus mehreren, aus Kunststoff gefertigten und miteinander verbundenen, mindestens teilweise mit Gleitkufen bildenden Vorsprüngen (12) versehenen Segmenten (13, 14) zusammengesetzt ist, die sich quer zur Umfangsrichtung des Distanzhalters jeweils mehrfach teilweise überlappen und in ihren Überlappungsbereichen miteinander fluchtende Ausnehmungen (18) zum Einsetzen von gemeinsame Gelenkorgane benachbarter Segmente bildenden Kunststoffbolzen (20) aufweisen, dadurch gekennzeichnet, daß mindestens an einer Segment-Überlappungsstelle des Distanzhalters (11) der Kunststoffbolzen als Exzenter-Spannbolzen (22) ausgebildet ist, der einen kleineren Durchmesser (Abschnitte 23) als die miteinander fluchtenden Ausnehmungen (18, 18′) der Segmente (13, 13′) aufweist und in Abschnitten, die bei eingesetztem Exzenter-Spannbolzen (22) in die Ausnehmungen (18′) eines der beiden sich überlappenden Segmente (13, 13') zu liegen kommen, mit exzentrischen zylindrischen Nockenkörpern (24) besetzt ist, deren Außendurchmesser dem Durchmesser dieser Ausnehmungen (18') entspricht.

2. Distanzhalter nach Anspruch 1, dadurch gekennzeichnet, daß der Exzenter-Spannbolzen (22) auf mindestens einer Außenfläche mit einer Verzahnung (30, 32) versehen ist, die zur Verstellsicherung in eine an einem Segment (13, 13') ausgebildete Gegenverzahnung (31, 33) eingreift.

3. Distanzhalter nach Anspruch 1 und 2, dadurch gekennzeichnet, daß die Verzahnung (30) auf der Umfangsfläche mindestens eines der exzentrischen Nockenkörper (24) und die Gegenverzahnung (31) auf der Innenfläche einer Segmentausnehmung (18') ausgebildet sind, in welche der Nockenkörper (24) bei eingesetztem Exzenter-Spannbolzen (22) zu liegen kommt.

4. Distanzhalter nach Anspruch 1 und 2, dadurch gekennzeichnet, daß die Verzahnung (32) auf der Stirnseite eines Anschlagbundes (26) am einen Ende des Spannbolzens (22) ausgebildet ist und mit einer auf der Außenseite eines Segmentes (13') konzentrisch zum Rand einer Ausnehmung (18') ausgebildeten Gegenverzahnung (33) zusammenwirkt.

5. Distanzhalter nach einem der Ansprüche 1 bis 4, dadurch gekennzeichnet, daß der Anschlagbund (26) am einen Ende des Exzenter-Spannbolzens (22) einen Rand (27) aufweist, der über den größten Teil des Drehbereiches des Exzenter-Spannbolzens (22) in eine an einem Segment (13') ausgebildete Sicherungsnut (28) eintaucht.

6. Distanzhalter nach einem der Ansprüche 1 bis 5, dadurch gekennzeichnet, daß am Anschlagbund (26) ein Drehanschlag (34) ausgebildet ist, der um 180° gegenüber der durch die Gestaltung des Randes (27) des Anschlagbundes vorgegebenen Einsetzstellung des Spannbolzens (22) versetzt ist.

**Claims**

1. A spacing piece or element (11) for heavy pipes (10) extending through protective pipes, comprising an annular body composed of several segments, (13, 14) made from plastics material, connected to one another and provided at least partially with projections (12) forming sliding skids and which in each case repeatedly partially overlap transversely to the circumferential direction of the spacing element and which have, in their overlap regions, recesses (18) in alignment with one another for the insertion of plastics bolts or pins (20) which form common hinge joint members of adjacent segments, characterised in that at least at one segment overlap location of the spacing element (11) the plastics bolt is designed as an eccentric clamping bolt (22) which has portions of smaller diameter than recesses (18, 18'), in alignment with one another, of the segments (13, 13') and eccentric cylindrical cam or dog bodies (24) in portions which, with the eccentric clamping bolt (22) inserted, come to rest in the recesses (18') of one of the two overlapping segments (13, 13'), the outside diameter of said bodies (24) corresponding to the diameter of the recesses (18').

2. A spacing piece according to claim 1, characterised in that the eccentric clamping bolt (22) is provided, on at least one outer surface, with a toothing (30, 32) which, for protection against displacement, engages into a counter-toothing (31, 33) fashioned on a segment (13, 13').

3. A spacing piece according to claims 1 and 2, characterised in that the toothing (30) is fashioned on the circumferential surface of at least one of the eccentric cam or dog bodies (24) and the counter-toothing (31) is fashioned on the inner surface of a segment recess (18') into which the cam or dog body (24) comes to rest with the eccentric clamping bolt (22) inserted.

4. A spacing piece according to claims 1 and 2, characterised in that the toothing (32) is fashioned on the end face of a stop collar (26) at the one end of the clamping bolt (22) and cooperates with a counter-toothing (33) fashioned on the outside of a segment (13') concentrically to the edge of a recess (18').

5. A spacing piece according to one of claims 1 to 4, characterised in that the stop collar (26) at the one end of the eccentric clamping bolt (22) has an edge (27) which over the greatest part of the rotary region of the eccentric clamping bolt (22) is in a safety groove (28) fashioned on a segment (13').

6. A spacing piece according to one of claims 1 to 5, characterised in that fashioned on the stop collar (26) is a rotary stop (34) which is offset by 180° relative to the insertion position, preset by the structure of the edge (27) of the stop collar, of the clamping bolt (22).

**Revendications**

1. Entretoise pour tubes lourds introduits dans des tubes de protection, comprenant un corps annulaire composé de plusieurs segments en matière plastique reliés les uns aux autres et munis au moins en partie de saillies formant patins, les segments s'enchevêtrant partiellement plusieurs fois transversalement à la direction circonférentielle de l'entretoise respectivement et comprenant dans leurs zones d'enchevêtrement, des évidements alignés les uns avec les autres pour insérer des broches en matière plastique formant des organes d'articulation communs à des segments adjacents, caractérisée en ce que le boulon en matière plastique relatif au moins à une zone d'enchevêtrement de segments de l'entretoise (11) est formé comme une broche tendeuse excentrique (22) qui offre un diamètre (tronçons 23) plus petit que les évidements alignés les uns avec les autres (18, 18') des segments (13, 13') et qui dans des tronçons à disposer lors de l'insertion de la broche tendeuse excentrique (22) dans les évidements (18') de l'un des deux segments s'enchevêtrant (13, 13') est dotée d'éléments cylindriques excentriques formant cames (24) dont le diamètre externe correspond au diamètre de ces évidements (18').

2. Entretoise selon la revendication 1, caractérisée en ce que la broche tendeuse excentrique (22) est munie, sur au moins une surface externe, d'une denture qui s'engage dans une denture complémentaire pratiquée dans un segment (13, 13') pour assurer un réglage.

3. Entretoise selon les revendications 1 et 2, caractérisée en ce que la denture (30) et la denture complémentaire (31) sont pratiquées sur la surface périphérique d'au moins l'un des éléments excentriques formant cames (24) et sur la surface interne d'un évidement de segment (18'), dans lequel est à poser ledit élément excentrique formant came (24) de la broche tendeuse excentrique insérée (22).

4. Entretoise selon les revendications 1 et 2, caractérisée en ce que la denture (32) est pratiquée sur la face frontale d'un collet arrêtoir (26) à une extrémité de la broche tendeuse (22) et coopère avec une denture complémentaire (33) pratiquée sur la face externe d'un segment (13') concentrique au bord d'un évidement (18').

5. Entretoise selon l'une des revendications 1 à 4, caractérisée en ce que le collet arrêtoir (26) à une extrémité de la broche tendeuse excentrique (22) présente un bord (27) qui s'encastre au-dessus de la majeure partie de la zone tournante de la broche tendeuse excentrique (22), dans une rainure de maintien (28) pratiquée dans un segment (13').

6. Entretoise selon l'une des revendications 1 à 5, caractérisée en ce qu'au niveau du collet arrêtoir (26) est formée une butée de rotation qui est déplaçable de 180° par rapport à la position d'insertion de la broche tendeuse (22) prédéterminée par la configuration du bord (27) du collet arrêtoir.

Fig.1

Fig.2

Fig.3

Fig.4

Fig.5